# EUROPEAN PATENT APPLICATION

(11) **EP 2 309 762 A1**
(43) Date of publication of application: **13.04.2011**
(21) Application number: 09761829.2
(22) Date of filing: 10.06.2009
(51) Int. Cl.: H04N 13/00, G06T 5/00, B60R 21/00, G02B 23/12, B60R 1/00, G02B 27/00

(54) **EQUIPMENT FOR THE AUTOMATIC ASSESSMENT OF ROAD SIGNS AND PANELS**

(30) Priority: 10.06.2008 ES 200801747
(71) Applicant: Euroconsult Nuevas Tecnologías, S.A., 28110 Algete (Madrid) (ES); Universidad de Alcalá, 28801 Alcala de Henares (Madrid) (ES); Safecontrol, S.A., 28034 Madrid (ES)
(72) Inventor: FERNÁNDEZ ÁLVAREZ, Raúl, E-28110 Algete (Madrid) (ES); ABELLÓ GARCÍA, Bernardo, E-28110 Algete (Madrid) (ES); GARCIA MÁRQUEZ, José Maria, E-28110 Algete (Madrid) (ES); SÁNCHEZ DOMÍNGUEZ, Fernando, E-28110 Algete (Madrid) (ES); SOTELO VÁZQUEZ, Miguel Ángel, E-28801 Alcalá de Henares (Madrid) (ES); BERGASA PASCUAL, Luis Miguel, E-28801 Alcalá de Henares (Madrid) (ES); GARCÍA GARRIDO, Miguel Ángel, E-28801 Alcalá de Henares (Madrid) (ES); REVENGA DE TORO, Pedro, E-28801 Alcalá de Henares (Madrid) (ES); GAVILÁN VELASCO, Miguel, E-28801 Alcalá de Henares (Madrid) (ES); FERNÁNDEZ LLORCA, David, E-28801 Alcalá de Henares (Madrid) (ES); PARRA ALONSO, Ignacio, E-28801 Alcalá de Henares (Madrid) (ES); FERNÁNDEZ ALCANTARILLA, Pablo, E-28801 Alcalá de Henares (Madrid) (ES); FERNÁNDEZ RODRÍGUEZ, José Pablo, E-28801 Alcalá de Henares (Madrid) (ES); GONZÁLEZ ARROYO, Álvaro, E-28801 Alcalá de Henares (Madrid) (ES); CALAVIA REDONDO, David, E-28034 Madrid (ES); MORENO LÓPEZ, Emiliano, E-28001 Madrid (ES); HERRANZ CABRILLA, Fernando, 28871 Alcalá de Henares (Madrid) (ES)
(74) Representative: Alvarez, Fernando
(86) International application number: PCT/ES2009/000324
(87) International publication number: WO 2009/150272

(57) **Abstract**

The invention relates to a device for automatic data acquisition from traffic signs and panels, said device performing, for said purpose, a retroreflection measurement of the white element of said signs or panels, and a measurement of the contrast between the white element of the sign or panel and a characteristic element of same (borders or text) in order to ensure a particular level of legibility. To this end, a vehicle (1) is equipped with a pulsed infrared illumination system (3), a system of stereoscopic cameras (2), a GPS (11), an odometer (12), a computer (5) mounted on an industrial rack, a data storage system (8), an event keyboard (7), and a TFT monitor (6) for viewing results. The infrared illumination system (3) is synchronised with the cameras (2). In this way, the infrared illuminator (3) illuminates the road area in alternate images, thereby providing illuminated road images and non-illuminated road images.

## Description

### OBJECT OF THE INVENTION

This invention pertains to a device for automatic data acquisition from traffic signs and panels, where said device is based on the principle of back-reflection of light and contrast of the signs and panels and uses for this purpose as a master generator an active illuminator that is based on pulsed infrared light, as well as high-resolution cameras. The device will be used under nighttime conditions in order to guarantee that the main source of light used to measure back-reflection is that generated by the infrared illuminator of the device and therefore to ensure that the illumination conditions on different roads and different streets are as alike as possible.

The object of the invention is to minimize the effects of illumination in a test during the measurements of back-reflection and contrast of signs and overheads or panels by subtracting the luminance measured in consecutive images.

As is evident, the sector of this technology is characterized by systems and devices for high-performance automatic data acquisition and measurement for roads, as well as the elements that comprise them and the items of road safety equipment that are installed on them.

### BACKGROUND TO THE INVENTION

Up until now, the only things that have been available for measuring the nighttime visibility of traffic signs and panels were point devices (retroreflectometers), which required direct measurement in contact with the sign or panel.

Attempts have been made at taking high-performance measurements with infrared cameras and recording images with modulated visible illumination (flashes) controlled by the operators of data-acquisition vehicles, but the results as regards the measurement of luminance were not satisfactory.

In general, all of the existing experimental systems require measurements under daytime and nighttime conditions in order to be able to make comparisons and provide only subjective evaluations of the visibility of the signs; they do not produce measurements that are comparable to those of point retroreflectometers.

### DESCRIPTION OF THE INVENTION

The automatic data-acquisition device for traffic signs and panels that is being proposed includes a series of elements and components housed in a vehicle that will be managed by two operators, one of whom will be responsible for driving the vehicle while the other will be in charge of controlling the elements and components installed aboard the vehicle itself.

Inside this vehicle there are two high-resolution (1392x1040 pixels) and high light-sensitivity digital cameras of the FireWire 800 (IEEE 1394-b) type, whose associated optics comprise a stereoscopic vision system and provide gray-scale images at a minimum rate of 18 frames per second. The acquisition of images by the cameras is controlled by a synchronization signal that is supplied by a control console that guarantees synchronization between the illumination of the road scene and the acquisition of stereoscopic images.

Likewise, a pulsed infrared illumination system will be installed on the vehicle using a device that is capable of providing infrared illumination at a range of 160 m with an angular aperture that is programmable between 30 and 60°. This infrared illumination system, which is used for image acquisition, is controlled by a control console that guarantees synchronization between the illumination of the scene and the acquisition of stereoscopic images.

The device also includes a processor for recording stereoscopic images on a hard disk; this processor is based on a computer that is installed on a spring-mounted and stabilized industrial rack that is installed in the interior of the vehicle and is perfectly anchored thereto, with the computer being based on a dual-core processor operating at 2.4 GHz.

Another component element of the device is a TFT monitor for displaying results during the acquisition and recording of sequences of stereoscopic images on the hard disk; this monitor will preferably be a 17-inch unit, though other sizes are also conceivable, that makes it possible to display indicators of the output of the acquisition and recording system, as well as indicators of possible malfunctions that may occur during this process.

The invention also uses an event keyboard for manual on-line input of information of interest by an operator during the recording of stereoscopic images during the work scenario, so that all of the events that are manually input by the operator, along with the information on the UTM (Universal Transfer Mercator) coordinates of the vehicle that are provided by the GPS, are sent to the hardware processor by serial communication. Thus the sequences stored on the hard disk contain the stereoscopic images along with the events input by the operator and the coordinates of the vehicle supplied by the GPS.

Another component of the device consists of a rack data storage system with a capacity of 16 removable hard disks with a capacity of 500 GB each. This system is used to store the stereoscopic images acquired on-line during the work scenario. The high-resolution images are stored uncompressed on the hard disks, and therefore a very high rate of data transfer is required between memory and hard disk.

The device also includes a system for processing stereoscopic images that is based on a personal computer [PC] with a dual-core processor operating at a minimum speed of 2.4 GHz. This system is installed on the premises of the data-acquisition company and is responsible for the off-line processing of the information. The processing system also takes as input the sequences of stereoscopic images acquired during the work scenario and generates as output a report that contains the measurement of back-reflection and contrast of all the traffic signs and panels on the section of roadway analyzed.

Likewise, as mentioned above, the device has a 12-channel differential GPS receiver with sub-meter precision in real time and decimeter precision in post-processing; it can achieve a maximum precision of approximately 10-15 cm and collects observations every 0.05 second. This device is able to work with another reference receiver (another GPS located at a known set of coordinates), correcting the positions obtained in real time, or else to carry out post-processing of the measurements based on the data from a reference station. It has CAN and RS-232 communications ports that make it possible to configure the connection to the processor. In this way it is possible to synchronize the acquisition of images with the position of the GPS so that each image recorded is associated with the position of the vehicle at the moment that the image is taken.

It also includes an odometer that consists of a rotating encoder that is linked to one of the wheels of the vehicle. This encoder provides 20,000 pulses for each 360° rotation executed by its shaft. By knowing the distance covered between every two pulses for the conditions under which the vehicle's wheels are operating (pressure and wear and tear), centimeter precision is achieved in measuring the distance covered by the vehicle. The odometer is supplied with a voltage of 5 V and is attached to the wheel by a magnet on each of the lugs of the latter. The output of the pulses from the odometer is sent to the processor since it is the latter that converts the pulses into distance. Both the pulses and the distance are synchronized with the acquisition of the images so that each image that is acquired is associated with the pulse number and the distance covered corresponding to the moment when the image was taken.

In addition, the device will include the corresponding power supply system, which will include two units. The first unit is a diesel generator that is able to supply 230 VAC with 3500 W continuous, with an output of 12 VDC, equipped with a remote-control console, electronic ignition, and an automatic shutdown system for low-oil level or overheating. The second unit is an inverter that converts 12 VDC from the vehicle battery into 230 VAC with the power of up to 1500 W continuous. Finally, as a power safety element, the system is supplemented by a UPS (Uninterruptible Power Supply), which supplies electrical power to the device for 10 minutes in the event that the above-mentioned units malfunction.

### DESCRIPTION OF THE DRAWINGS

To supplement the description that is given below and to make it easier to understand the features of the invention, in accordance with a preferred embodiment thereof, as an integral part of said description, attached is a single set of drawings in which, by way of illustration and without being limiting, a general diagram is given that corresponds to a vehicle that includes the device, with the components and elements that form the actual device for automatic data acquisition from traffic signs and panels that is built in accordance with the object of the invention.

### PREFERRED EMBODI1VIENT OF THE INVENTION

Looking at the above-mentioned figure, the vehicle (1) is seen which is situated for carrying out the automatic data acquisition of traffic signs and overheads or panels; on this vehicle (1) are mounted two high-resolution, high light-sensitivity, trigger-input digital cameras (2) for the synchronized acquisition of gray-scale images with a minimum capture rate of 18 images per second. In addition, the system also includes a pulsed infrared illumination system with the capability of orientation in the vertical and horizontal directions and the ability to illuminate out to a distance of up to 160 m, thus establishing synchronization between the activation of this infrared illumination system (3) and the acquisition of images by the cameras (2) by means of a control console (4), all of which is done in order to ensure that the images are acquired at the same moment that the infrared illumination is done.

Moreover, provision has been made to ensure that the device also includes a processor (5) for the acquisition and recording of stereoscopic images; this processor is based on a server computer that is installed in a spring-mounted and stabilized industrial rack that is supplemented by a TFT monitor (6), a graphical interface to indicate to the operator the status of the application for the acquisition and display of the images during the execution of the measurements, supplemented by an event keyboard (7) that is provided inside the vehicle and is designed to make it possible for an operator to input additional information of interest manually in order to supplement the information that is obtained in the recording of the stereoscopic images.

The device also includes a data storage system and stereoscopic image processing device (8-9); the former is composed of a set of 16 removable hard disks, each with a capacity of 500 GB, for storing the stereoscopic images, which will also be mounted in a spring-mounted and stabilized industrial rack just like the processor (5), while the stereoscopic image processing device will be provided for measuring the back-reflection and contrast of the traffic signs and panels that are present on the section of roadway that is recorded during the on-line operation of the system.

Likewise, an electric power system (10) has been provided for powering the various items of equipment installed on board the vehicle; this system includes a 230 VAC generator, diesel, with an output of 3500 W, and a 12-230 V converter with a power of 1500 W.

Finally, there is an odometer, which is composed of a rotating encoder (12) which is connected to one of the wheels of the vehicle in order to calculate the distance covered by the vehicle from the start of the measurement to the moment when each image is acquired, as well as a GPS (11) as a global positioning system for determining the location of the vehicle at each of the moments when the recordings of the images are made.

The device that is described is supposed to be used under nighttime conditions in order to guarantee that the main source of light used for measuring back-reflection is that generated by the infrared illuminator (3) and to ensure thereby the maximum homogeneity of the illumination conditions on different roads and different days so that the incidence of the infrared light on the traffic signs and panels under nighttime conditions will cause this light to reflect on the signs and panels, where the reflected light will be captured by the stereoscopic system that is formed by the two high-resolution cameras (2); the level of luminance measured by these cameras will be in units of gray level, directly proportional to the level of luminance of the signs and panels measured in candles per m².

In addition, there exists a physical relationship between the measurement of luminance and the measurement of back-reflection as a function of distance and angular orientation existing between the master source of light, the reflective material, and the measurement system, where this relationship is established by means of a pre-calibration process. With this process, for each traffic sign and panel detected in the sequence of images, the measurements of distance to the sign or panel, level of luminance, and level of back-reflection are carried out, thereby making it possible to plot, for each sign and panel, one curve of luminance and another curve of back-reflection of the white element in the same measurements as a function of distance, where in order to do so it is necessary to locate the white color within each sign or panel using image processing techniques.

Likewise, the different elements that exist in the signs and panels (border, text, background) are automatically separated by image processing, making it possible to make independent measurements of luminance and back-reflection for each part of the sign or panel (border, text, background) so that, based on the measurements of luminance and back-reflection of each part of the sign or panel, contrast, which is defined as the relationship of back-reflection between the background and the border or between the text and the background, is calculated depending on which are the key elements for determining the legibility of the sign or panel.

As for the process of data acquisition itself, it is done at two times, where the first phase or process is referred to as the "On-Line Process", while in the second part of the process PC-based image processing equipment is used, as mentioned above. As input, the equipment takes the sequences of images recorded by the equipment that carries out the "On-Line Process" and generates a report that contains the measurements of back-reflection and contrast of all of the signs and panels present on the section of roadway analyzed; this part of the process is referred to as the "Off-Line Process".

The purpose of the On-Line Process is to acquire and record sequences of stereoscopic images on hard disk. These sequences contain images of sections of roadways illuminated by the infrared illumination system (3) installed on board the data-acquisition vehicle itself. The cameras (2) are located in the interior of the vehicle and are centered with respect to the longitudinal axis thereof; there is a separation between them of more than 35 cm in order to guarantee maximum precision in the measurements of depth (distance) that are obtained by these cameras, especially at long distances. The locations of the cameras (2) and their angular apertures also make it possible to cover a minimum zone of visibility of 10 m to the left and right of the longitudinal axis of the vehicle for distances of more than 20 m with respect to the vehicle. In this way it is guaranteed that all of the traffic signs and panels located in the roadway that is being analyzed will be visible in the images, including those located on the sides of the road. The cameras (2) are programmed with fixed values of gain and aperture for the "shutter". The illumination system (3) emits infrared light with a maximum power of 60 W. This level of power makes it possible to ensure that there will be no injury to the other drivers traveling on the same road as the data-acquisition vehicle (1) but moving in the opposite direction. The infrared illumination system (3) has been configured with an angular aperture of 30° so that a maximum illumination range of 160 m is achieved. The illuminator system is installed on the outside of the vehicle (1), on its roof, in such a way that the longitudinal axis of the illuminator is parallel to the longitudinal axis of the vehicle (1) and is therefore located in a position that is equidistant from the cameras (2) in order to guarantee that the illumination of the images on the road is perceived virtually identically by the two cameras. The illuminator system (3) is activated by means of an external synchronization signal. This synchronization signal makes it possible to guarantee that the illumination of the road scene is perfectly synchronized with the moments when the stereoscopic images are acquired by the cameras (2). The illumination of the road scene is done in alternating frames so that the infrared illuminator (3) is activated in one image acquisition frame and deactivated in the next. This makes it possible to have pairs of stereoscopic images that contain the illuminated scene and pairs of images that contain the scene without illumination. From this sequence of alternately illuminated images, the values of luminance measured by the cameras (2) in two consecutive frames are subtracted. With this subtraction technique, it is possible to minimize the effect of ambient illumination on the luminance measurements, thereby ensuring that virtually all of the luminance of the signs and panels measured by the cameras (2) is due to the illumination emitted by the vehicle itself (the vehicle's headlights and the infrared illuminator). This novel technique makes it possible to guarantee maximum uniformity in the conditions under which luminance is measured. The external synchronization signal is supplied by a system based in a control console (4). This synchronization signal is used, on the one hand, to synchronize the infrared illumination system (3) with the stereoscopic cameras (2) and, on the other, to cross-synchronize the moments when the images of the two cameras (2) are acquired and to avoid temporal drifts between them. Using the event keyboard (7), an operator manually inputs information pertaining to the kilometer point or the type of road on which the data-acquisition vehicle (1) is located during the recording of sequences of stereoscopic images for subsequent processing and analysis. The processor (5) on board the data-acquisition vehicle (1) receives the images from the stereoscopic system, the coordinates supplied by the GPS receiver (11), the measurement of distance provided by the odometer (12), and the information supplied by the event keyboard (7). All of this information is structured and stored on hard disk for each pair of images. In this way all of the information received by the processor (5) is stored on the hard disks of the device at a frequency of 18 Hz (18 times per second). During the process of acquisition and recording of sequences of stereoscopic images, the processor (5) displays on the TFT monitor (6) the images acquired by the stereoscopic cameras (2), providing an indicator that the device is operating properly, as well as a second indicator that shows the actual frequency of recording of the images on the hard disk. On the processor (5) a software application is executed that provides a graphical environment with which the operator can manage the names and locations on the hard disk of the stereoscopic sequences that are acquired during the recording process. Each removable hard disk has the capacity to store approximately 2.5 hours of road sequences. Due to the conditions under which the system has to operate (inside of a moving vehicle), the entire system has to be resistant to vibration and ensure good thermal and mechanical insulation. For this reason the hardware for acquisition and recording of stereoscopic image sequences, as well as the storage system (8), are installed on an industrial rack that is spring-mounted and stabilized against vibration. During the recording process, the vehicle can normally travel at speeds of up to 120 km/hr or at the top speed allowed on the road in question, depending on the applicable traffic regulations. It is recommended that the vehicle (1) always be driven in the right lane of the road in order to guarantee that the angle of entry of the light reflected by the signs and panels will not exceed the maximum values used for the calibration of typical materials and to guarantee that the signs and panels will be properly illuminated by the infrared illuminator (3). The files generated by the processor (5) on board the data-acquisition vehicle constitute the input information for the execution of the "Off-Line Process".

This "Off-Line Process" takes as input the files that are generated by the processor (5) on board the vehicle (1). These files contain sequences of stereoscopic images, GPS coordinates, measurements of distance provided by the odometer (12), and information supplied by the operator from the event keyboard (7) (kilometer point, type of road). Based on all this information, processing is done of the images contained in the sequences in order to carry out the search for traffic signs and panels and the measurements of back-reflection and contrast therefrom. The first step for the image processing system consists in detecting the locations of the traffic signs and panels present on the sections of roads recorded. To do this, use is made of the Hough transform for circles, which makes it possible to detect circular signs, including the "Stop" sign. By using the Hough transform for straight lines and properly combining the results that it provides, triangular and square signs, arrows and panels are detected. In the next step use is made of the stereoscopic system, which has been calibrated in advance, along with the information that is provided by the odometer (12), to measure the relative distance between the vehicle (1) and the sign and/or panel that is detected. Likewise, using the stereoscopic system the height and lateral distance of the sign or panel is measured with respect to the longitudinal axis of the lane in which the vehicle is traveling. The information pertaining to the height and lateral distance of the sign detected makes it possible to eliminate possible false measurements, where the key information that is used to filter out such false measurements is the normalized geometric values that are used by the highway agency responsible for the installation of signs and panels. Every sign and panel that is detected is subsequently analyzed to put it into one of the following categories: a "Stop" sign, a circular sign with a white background, a circular sign with a blue background, a triangular sign, a square sign with a white background, a square sign with a blue background, a panel with a white background, a panel with a blue background. For each type of sign and panel, a process of segmentation or separation of the basic elements that constitute said sign or panel is carried out, where the basic elements that are established are the background of the sign or panel, the borders of the sign, and the text of the sign or panel. For each key element of the sign or panel (border, background, text), the mean luminance value measured by the camera in gray-scale is calculated. The measurements of luminance and distance of the various elements (border, background, text) are made for each sign and panel detected in all the image frames analyzed. This makes it possible to plot a curve of luminance (measurement in levels of gray) as a function of distance (measurement in meters). A novel technique of "backtracking" is used to obtain measurements of luminance for up to 100 m for the case of signs and up to 170 m for the case of panels. The technique of "backtracking" consists in analyzing the sequences of images in the direction opposite the direction in which they were recorded in the work scenario. This makes it possible for the tracking in the images of the signs and panels detected to be done at distances much greater than those that can be achieved with the usual procedures for analyzing video sequences. The curves of luminance as a function of distance that are plotted for each key element of the sign or overhead are converted into back-reflection curves as a function of distance. To do this, several conversion surfaces are used that take as input values the luminance measured by the system of cameras (2) and the distance between the cameras and the sign or panel and provide as output the estimated value of back-reflection for said element. Three conversion curves are used, one for each characteristic class of material from which the sign or panel can be constructed: class 3, class 2, or class 1. The curve assigned to each sign or panel will be the one for which the best fit of the three possible hypotheses is obtained. The conversion curves are obtained during a calibration process that is carried out off- line, prior to the deployment of the data-acquisition device in the work scenario. For the calibration of the conversion curves, three master signals with known back-reflection values are used that are plotted with materials of class 3, class 2, and class 1, respectively. For each of the master signs, a process of image acquisition and recording is carried out using the data-acquisition vehicle (1) and all of the instruments on board the vehicle. The master signs are installed 2.5 m above the ground. During the process of image recording, the vehicle (1) travels along a lane whose longitudinal axis is at a lateral distance of 5 m from the master signs utilized. The vehicle begins to travel at a distance of 200 m from the master sign, moving toward the sign, and stops when the sign disappears from the field of view of the cameras (2). The images that are acquired and recorded during the calibration process are processed to obtain the luminance curves as a function of distance for the three master signs. The acquisition of the values of the conversion curves is done based on the luminance curves obtained for the three master signs during the calibration process, along with information on the actual values of back-reflection for the three master signs, measured at distances of 23, 34, 67, 100, and 166 m. The use of the conversion curves makes it possible to obtain curves of back-reflection as a function of distance from the curves of luminance as a function of distance measured by the cameras. The measure of back-reflection of the white element of the sign or panel, measured at 100 m, corresponds to the normalized measurement for an input angle of 5° and an observation angle of 0.33°, given the location geometries of the cameras (2) and the infrared illumination system (3) in the vehicle (1). Using the measurement of back-reflection measured at 100 m, it is determined that the traffic signs and panels are in the proper condition in accordance with the established standards. Likewise, the measurement at 100 m of the back-reflection of the other elements of the sign or panel, such as the border or the text, makes it possible to calculate the contrast relationship between the back-reflection measured for the white element of the sign or panel and the key element of the sign or panel (border or text, depending on the case). The contrast measurement that is obtained in this way makes it possible to determine the level of legibility of the sign or panel in accordance with the normalized values of contrast established by the cognizant authorities pursuant to the applicable legislation. Using the values of back-reflection measured at distances of 23, 34, 67, 100, and 166 m and comparing them to the back-reflection values for these distances that are set forth by the applicable standard for the materials of class 3, class 2, and class 1, a classification is made of the type of material from which the traffic sign or panel is made. In this way, it is determined whether the sign or panel surveyed is of the class required by the applicable standard depending on the type of road in question. Finally, a determination is made of whether or not the sign or panel meets the standard established based on the class of sign, level of back-reflection, and contrast measured. The system generates a final report that contains, for each sign or panel, the following information: back-reflection curve, back-reflection measured at 100 m, contrast measured at 100 m, type of road, kilometer point, GPS coordinates of the sign or panel, height with respect to the ground, lateral distance with respect to the center of the lane on which the data-acquisition vehicle is traveling, name of the road on which it is located, direction of travel, type of material of the sign or panel, type of sign or panel (circular, triangular, square, panel), final decision as to whether or not the sign or panel meets the standard established based on the type of sign, level of back-reflection, and contrast. This information is managed from a software application that makes it possible to visualize and manipulate in graphical form the contents of the report generated for each section of road analyzed.

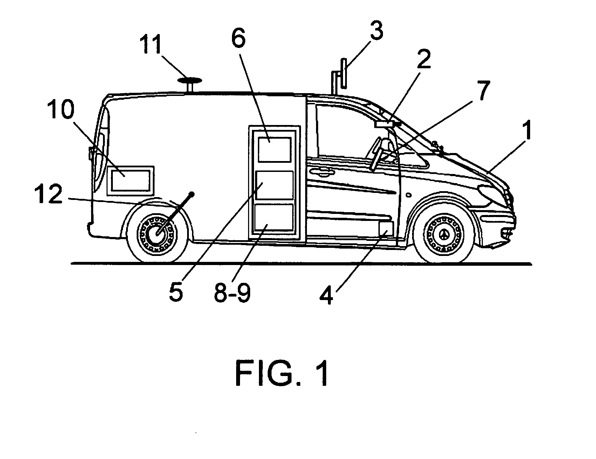

## Claims

1. Device for automatic data acquisition from traffic signs and panels which, based on the measurement of the back-reflection and contrast of the signs and panels under nighttime conditions, **characterized by** the fact that it includes a vehicle (1) on which are mounted two high-resolution and high light-sensitivity digital cameras (2) with their associated optics for determining a stereoscopic vision system for image capture, a pulsed infrared illumination system (3), which is synchronized with the acquisition of images by the digital cameras (2) and is controlled by a control console (4) which guarantees synchronization between the acquisition of images by the cameras (2) and the infrared illuminator system (3); it also includes a processor (5) for acquiring the stereoscopic images and recording them on hard disk, where this processor (5) is based on a computer that is stored on a spring-mounted and stabilized industrial rack that is anchored in the interior of the vehicle itself (1), including also a TFT monitor (6) for displaying the results during the acquisition and recording of the sequence of stereoscopic images; an event keyboard (7) is also provided for manual on-line input of information of interest by an operator during the recording of stereoscopic images during the work scenario; there is also a storage system (8) for storing sequences of stereoscopic images that is based on a rack with a capacity of 16 removable hard disks with a capacity of 500 MB each, supplemented by a processing system (9) for processing stereoscopic images for measuring the back-reflection and contrast of the traffic signs and panels on the section of roadway recorded during the on-line operation, supplemented by an odometer (12) for determining the distance covered by the vehicle (1), as well as a GPS (11) for determining the positions and locations of the vehicle at each of the moments when the recordings of the images are made, including also an electric power system (10) for all of the components and systems installed on board the vehicle itself (1).

2. Device for automatic data acquisition from traffic signs and panels in accordance with Claim 1, **characterized by** the fact that the digital cameras (2) supply images in gray at a minimum rate of 18 frames per second, where these digital cameras are of the FireWire 800 (IEEE 1394-b) type, 1392x1040 pixels.

3. Device for automatic data acquisition from traffic signs and panels in accordance with Claim 1, **characterized by** the fact that the pulsed infrared illumination system (3), which is synchronized with the acquisition of images by the stereoscopic cameras (2), ensures that the effect of ambient illumination under nighttime conditions is minimized in the original luminance measurements of signs and panels made by these cameras (2).

4. Device for automatic data acquisition from traffic signs and panels in accordance with Claim 1, **characterized by** the fact that for each type of sign and panel a process of segmentation or separation of the basic elements that make up the sign or panel is established, whereby the elements established are the background of the sign or panel, the borders of the signs, and the text of the sign or panel, thereby making it possible to plot a curve of luminance or back-reflection as a function of distance for each key element (background, border, text) for each sign and panel that is present on the section of roadway analyzed, with the feature that this curve of back-reflection values measured reaches a range of 6 m [sic] in the case of signs and 180 m for the case of panels.

5. Device for automatic data acquisition from traffic signs and panels in accordance with Claim 1, **characterized by** the fact that the point levels of back-reflection and contrast of the signs and panels can be measured for values of angle of entry of 5° and observation angles of 0.33°.

6. Device for automatic data acquisition from traffic signs and panels in accordance with Claim 1, **characterized by** the fact that the conversion of the curves of luminance obtained by back-reflection as a function of distance make it possible to determine the type of material of which the corresponding sign or panel is made, as well as to determine the condition of the sign or panel in accordance with three possible levels of output, one being the proper condition, another being in the process of deterioration, and the third being a deteriorated condition; these values are calculated as a function of the back-reflection and contrast curves measured as a function of the ideal curves for each class.

7. Device for automatic data acquisition from traffic signs and panels in accordance with Claim 1, **characterized by** the fact that the images for obtaining the luminance curves are converted in order to obtain the back-reflection curves based on the luminance curves plotted for the master signs during the corresponding calibration process using as a reference distances of 23, 34, 67, 100, and 166 meters, respectively.
